# EUROPEAN PATENT SPECIFICATION

(11) **EP 0 445 171 B1**
(45) Date of publication and mention of the grant of the patent: **02.03.1994**
(21) Application number: 89913050.4
(22) Date of filing: 09.11.1989
(51) Int. Cl.: A61G 5/04, B62D 61/10

(54) **A WHEELCHAIR WITH A SIX-WHEEL CHASSIS**
ARMSESSEL MIT SECHSRADGESTELL
FAUTEUIL ROULANT AVEC CHASSIS A SIX ROUES

(30) Priority: 28.11.1988 SE 8804299
(43) Date of publication of application: 11.09.1991
(73) Proprietor: MERCADO MEDIC AB, S-181 22 Lidingö (SE)
(72) Inventor: DU REES, Stephan, S-181 60 Lidingö (SE)
(74) Representative: Bjelkstam, Peter
(86) International application number: SE8900647
(87) International publication number: WO9006097

(56) References cited:
- WO-A-87/06205
- DE-A- 2 256 934
- US-A- 4 513 832
- US-A-35 060 79

## Description

The present invention relates to a wheelchair chassis of the type comprising a central, transverse main shaft having two drive wheels each driven by its separate electric motor and a front wheel pair as well as a rear wheel pair. Each of those wheel pairs comprises two support wheels, each mounted at the free end of a supporting arm which is swingable in a vertical plane. The supporting arms for the two rear wheels are in unison swingable around the main shaft, whereas the supporting arms of each front wheel is individually swingable around an axis adjacent the main shaft.

The main advantage of such a motor-powered wheelchair is that it combines a long distance between the front and rear wheels with a small turning radius. The last-mentioned feature is attained thanks to the fact that the propulsion force is transmitted via the central wheels in combination with those being driven individually. This means that the one drive wheel can rotate in the one direction and the other drive wheel simultaneously in the opposite direction, whereby the chassis is turned by being rotated around the center of the main shaft. Close to that shaft is the geometric axis of the vertical cylinder unit supporting the chair proper, meaning that the resulting point of gravity of the chair, with the handicapped person sitting therein, can be located in or very close to the chassis center.

The reason for which each of the four freely rotating wheels is vertically movable is that such an arrangement is necessary to avoid slipping of the drive wheels and so that the wheelchair can smoothly pass over obstacles. Another reason is that it is desirable to maintain a constant wheel pressure at all wheels even when the chair passes such obstacles.

In one type of prior art arrangements, e.g. US-A-3,506,079, a vehicle comprises six wheels, where each of the supporting arms of the two rear wheels being turnable around a main shaft while in another type of prior arrangements the vertical movements of the four corner wheels are controlled by use of resilient means. However, such means cannot maintain a constant wheel pressure and, in addition thereto, the lateral stability of the wheelchair in connection with obstacle passages is reduced.

The object of the invention is to provide a wheelchair of the type above discussed, which during an obstacle passage, causing the wheelchair to slant laterally, keeps the wheel pressure constant and compensates for the slant so that also the lateral stability remains substantially unaffected. According to the main characteristic of the invention this advantageous performance is realized in a wheelchair chassis having two front supporting arms each of which does, when its free end is raised, due to the corresponding wheel passing an obstacle in the underlying surface, via a linkage convert this upward movement to a downward movement.

One embodiment of the invention will now be described with reference to the drawing.

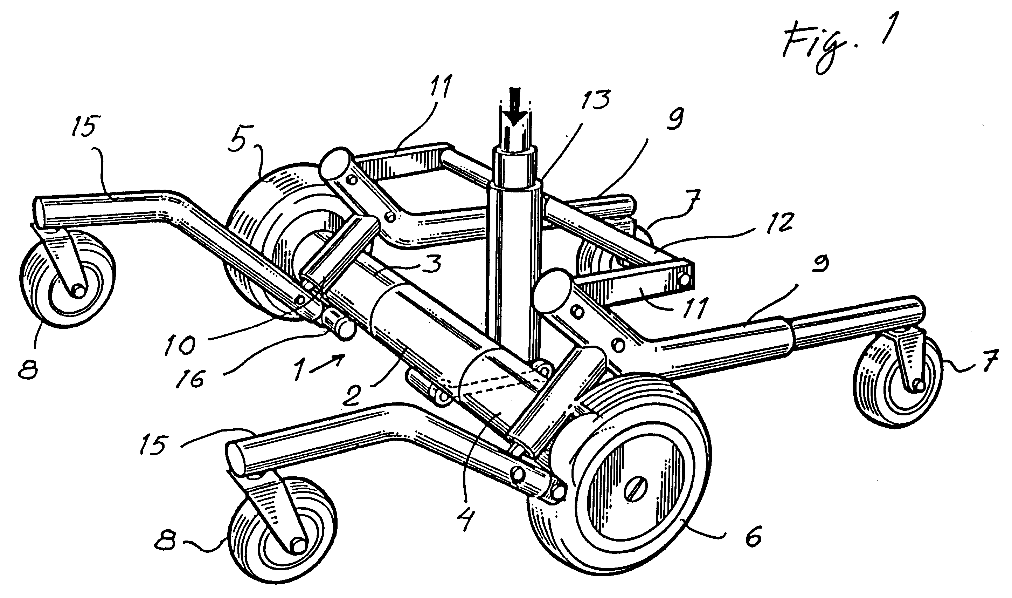

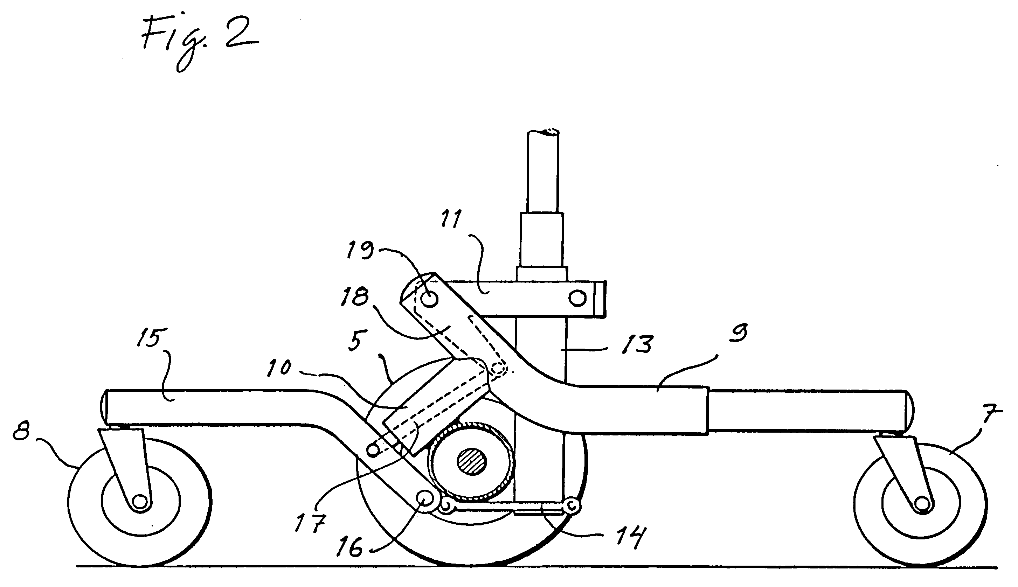

Figure 1 is a perspective view showing a wheelchair chassis according to the invention and figure 2 is a corresponding elevational view.

The main, or central, shaft 1 of the chassis has an intermediate section 2 and two end sections 3, 4 each of which is provided with an electric drive motor for the adjacent drive wheel 5 and 6, respectively. The four freely rotating wheels, the rear wheels 7 and the front wheels 8, are according to this embodiment of the swivelling castor type. Each of the rear wheels 7 is mounted at the free end of a supporting arm 9 the front end of which is bent upwards and there connected to an obliquely downward and forward directed sleeve 10, in its turn welded to the motor housings which surround end sections 3, 4 and can turn around shaft 1. The front end of a link arm 11 is connected to the front end of each supporting arm 9 and the rear end of said link arm is rigidly connected to a transverse rod 12 which between its ends is welded to a cylinder unit 13 supporting the chair section (not shown) of the wheelchair.

Mounted on the bottom part of the main shaft intermediate section 2 is a bushing for the front end of an arm 14 extending backwards and having its rear end articulated to cylinder unit 13 adjacent to the bottom end thereof.

The front castors 8 are also each supported by an arm 15 the inner end of which is mounted in a bushing 16. Adjacent to that end there is swingably mounted the one end of a link 17 the opposite end of which is articulated to the one leg 18 of a V-shaped link. The other leg of that link is constituted by arm 11 and at its apex it has an axle 19 journaled close to the front end of supporting arm 9. For aesthetical reasons link 17 and leg 18 are located inside sleeve 10 and the front portion of arm 9, respectively.

The operation of the arrangement above described is as follows.

Let it be assumed that the left (as seen in figure 1) front wheel 8 passes an obstacle in the shape of a bumb on the ground surface. This causes arm 15 to turn clockwise around its bearing 16 and, in the progress, to push link 17 upwards whereby V-link 18, 11 tends to turn counter-clockwise around its axle 19. Due to the connection between the right arm 11, cylinder 13 and rod 12 this produces a reactional force which permits wheel 8 to rise but keeps the wheel pressure constant thanks to the fact that the other front supporting arm is caused to carry out a movement directed downwards.

When, in the corresponding manner, the left rear wheel 7 then meets the obstacle, arm 9, sleeve 10 and motor housing 4 are turned around the central shaft causing cylinder 13 to slant whereby the lateral stability and the wheel pressure are maintained.

It should be understood that in a wheelchair chassis according to the invention the drive wheels will always maintain their ground contact whereby slipping is avoided and that its ability to pass over obstacles and its lateral stability do not counteract each other.

## Claims

1. A wheelchair having a chassis with a central, transverse main shaft (1) comprising two drive wheels (5, 6) individually driven by separate motors, and a front wheel pair as well as a rear wheel pair, each constituted by two wheels (7, 8) mounted on individual supporting arms (9, 15), each of which is swingable in a vertical plane, the supporting arms of the two rear wheels being turnable around said main shaft whereas the supporting arms (15) of the two front wheels are individually turnable around an axle (16) near the main shaft, **characterized** in that each front supporting arm (15) is arranged, in response to a rising movement of its free end caused by its wheel passing a bump in the ground surface, via a link mechanism (17, 18, 19, 11) to transmit this movement to a downward movement of the other front supporting arm for the purpose of maintaining a constant wheel pressure at the front and rear wheels.

2. A wheelchair as claimed in claim 1, **characterized** in that the link mechanism comprises a link (17) between each front supporting arm (15) and the one end of an angled lever (18, 11) rotatably mounted (19) in the rear supporting arm (9) at the same side of the wheelchair, the other end being articulated to a transverse rod (12), which at its longitudinal center is rigidly connected to a cylinder unit (13) supporting the chair unit of the wheelchair and via a link (14) connected to a sleeve (2) rotatably surrounding the intermediate portion of main shaft (1).

## Patentansprüche

1. Rollstuhl mit einem Fahrgestell mit einer zentralen, querverlaufenden Hauptachse (1), die zwei Antriebsräder (5, 6) umfaßt, die einzeln von separaten Motoren angetrieben werden, und einem vorderradpaar sowie auch einem Hinterradpaar, von denen jedes aus zwei Rädern (7, 8) besteht, die auf einzelnen Tragarmen (9, 15) angebracht sind, von denen jeder in einer vertikalen Ebene verschwenkt werden kann, wobei die Tragarme der beiden Hinterräder um die Hauptachse gedreht werden können, wohingegen die Tragarme (15) der beiden Vorderräder einzeln um eine Achse (16) nahe der Hauptachse gedreht werden können, **dadurch gekennzeichnet,** daß jeder vordere Tragarm (15) angeordnet ist, um in Reaktion auf eine Steigbewegung seines freien Endes, die dadurch bewirkt wird, daS sein Rad eine Unebenheit auf der Bodenfläche passiert, über einen Gelenkmechanismus (17, 18, 19, 11) diese Bewegung an eine nach unten gerichtete Bewegung des anderen vorderen Tragarms weiterzuleiten, um einen konstanten Raddruck an den Vorder- und Hinterrädern aufrechtzuerhalten.

2. Rollstuhl nach Anspruch 1, **dadurch gekennzeichnet**, daß der Gelenkmechanismus ein Verbindungsglied (17) zwischen jedem vorderen Tragarm (15) und dem einen Ende eines abgewinkelten Hebels (18, 11) umfaßt, der drehbar an dem hinteren Tragarm (9) auf der gleichen Seite des Rollstuhls angebracht ist, wobei das andere Ende an einer Querstange (12) angelenkt ist, die an ihrem in Längsrichtung mittleren Punkt starr mit einer Zylindereinheit (13) verbunden ist, die die Stuhleinheit des Rollstuhls trägt und über ein Verbindungsglied (14) mit einem kurzen Rohrstück (2) verbunden ist, das drehbar den Zwischenabschnitt der Hauptachse (1) umgibt.

## Revendications

1. Fauteuil roulant comportant un châssis muni d'un arbre principal (1) transversal central, comportant deux roues d'entraînement (5, 6) entraînées de manière individuelle par des moteurs séparés, et une paire de roues avant ainsi qu'une paire de roues arrière, chacune étant constituée par deux roues (7, 8) montées sur des bras de support individuels (9, 15) qui peuvent chacun basculer dans un plan vertical, les bras de support des deux roues arrière pouvant tourner autour dudit arbre principal alors que les bras de support (15) des deux roues avant peuvent tourner de manière individuelle autour d'un essieu (16) situé à proximité de l'arbre principal, caractérisé en ce que chaque bras de support avant (15) est agencé, en réponse à un mouvement de relevage de son extrémité libre entraîné par le passage de la roue sur un obstacle situé à la surface du sol, via un mécanisme de liaison (17, 18, 19, 11) destiné à transmettre un mouvement vers le bas à l'autre bras de support avant afin de maintenir une pression de roue constante au niveau des roues avant et arrière.

2. Fauteuil roulant selon la revendication 1, caractérisé en ce que le mécanisme de liaison comporte une liaison (17) située entre chacun des bras de support avant (15) et l'une des extrémités d'un levier (18, 11) formant un angle monté de manière rotative (19) dans le bras de support arrière (9) situé du même côté du fauteuil roulant, l'autre extrémité étant articulée sur une tige transversale (12), qui au niveau de son axe longitudinal est reliée de manière rigide à un ensemble (13) formant vérin supportant l'ensemble formant fauteuil du fauteuil roulant et via une liaison (14) relié à un manchon (2) entourant de manière rotative la partie intermédiaire de l'arbre principal (1).
